Europäisches Patentamt

(19) **European Patent Office**

Office européen des brevets

(11) Publication number: **0 107 257**
**B1**

(12) **EUROPEAN PATENT SPECIFICATION**

(45) Date of publication of patent specification: **30.12.86**

(51) Int. Cl.⁴: **A 23 L 1/16**

(21) Application number: **83201509.3**

(22) Date of filing: **20.10.83**

(54) Noodles and process for manufacture thereof.

(30) Priority: **25.10.82 US 436391**

(43) Date of publication of application:
**02.05.84 Bulletin 84/18**

(45) Publication of the grant of the patent:
**30.12.86 Bulletin 86/52**

(84) Designated Contracting States:
**AT BE CH DE FR GB IT LI NL SE**

(56) References cited:
**DE-A-2 719 580**
**FR-A-2 157 689**
**US-A-4 044 165**

(73) Proprietor: **UNILEVER NV**
**Burgemeester s'Jacobplein 1 P.O. Box 760**
**NL-3000 DK Rotterdam (NL)**
(84) **BE CH DE FR IT LI NL SE AT**

(73) Proprietor: **UNILEVER PLC**
**Unilever House Blackfriars P.O. Box 68**
**London EC4P 4BQ (GB)**
(84) **GB**

(72) Inventor: **Blemlek, William A., Jr.**
**10 Fairview Avenue**
**Pequannock New Jersey, 07440 (US)**

(74) Representative: **Léon, Alain Elie, Dr. et al**
**Unilever N.V. Patent Division P.O. Box 137**
**NL-3130 AC Vlaardingen (NL)**

Courier Press, Leamington Spa, England.

## Description

The invention relates to a noodle product which includes lecithin and to a process for preparing such noodle products.

Recent medical evidence that the normal dietary constituent, lecithin, may be of value in treating certain health problems and the growing popularity of health foods has increased the need for palatable foods that contain a high level of lecithin.

In pharmaceutical products, lecithin can be used as a source of choline and inositol which are regarded as members of the B-Complex vitamins. See Soybeans and Soybean Porducts, Markley (ed.) 610 (1951). The choline in lecithin is a source of labile methyl groups, and inasmuch as it contains no cholesterol it can be used for its lipotropic effect in treating hypercholesterolemia, arteriosclerosis and psoriasis. Lecithin is an essential factor in the prevention of fatty degeneration of the liver. Lecithin may assure a better utilisation in the body of the fat-soluble Vitamin A, carotene and Vitamin D. See Markley at page 628. An additional reference which discusses the usefulness of lecithin in the diet is Nutrition and the Brain, Volume 5, pp. 253—441, (1979), Choline and Lecithin in Brain Disorders, Barbeau, Growdon and Wurtman (eds.); Raven Press.

Lecithin has been used in food products as an emulsifier. US Patent No. 4 044 165 to Baumann describes a process for preparing precooked pasta products wherein 5 percent lecithin is added directly to the semolina. The lecithin acts as an emulsifier to prevent expansion of the dough at the exit of the draw-plate or die.

US Patent No. 1 971 886 to Votaw et al. discloses a process for preparing a cake composition containing more sugar than flour wherein about 0.1 to 0.3 percent lecithin is added.

US Patent No. 2 632 705 to Scharf discloses a dried composition wherein lecithin is combined directly with a gelatinised, starchy material and particularly with cereal, bean, fruit, nut or seed flour.

US Patent No. 2 334 402 to Fitzpatrick et al. teaches the mixing of lecithin with a granular water soluble material such as table salt or cane, corn or beet sugar to form a greasy mass and then grinding the mixture to distribute the lecithin uniformly. The method is effective for distributing small amounts of lecithin in a large amount of food. This method is inappropriate for use in foods not containing salt or sugar or for use in diets which restrict salt and sugar intake.

According to one aspect, the present invention provides a noodle product which includes flour and lecithin wherein the lecithin content is higher than 5% by weight of the dry content of the noodle product.

By noodle product, henceforth also called noodles, is meant any kind of pasta-like product irrespective of its size or shape and the way in which it has been prepared. Examples of noodle products are vermicelli, macaroni, spaghetti, noodles shaped in the form of ribbons, shells or letters, and enriched versions thereof, e.g. enriched with vegetables, the pasta parts of lasagna and ravioli, and snacks e.g. obtained by puff-drying noodles.

Preferably, the lecithin content is at least 10%, more preferably at least 20% by weight of the dry content of the noodle product.

According to another aspect the invention provides a process for preparing a noodle product wherein a slurry which includes lecithin is blended with flour to yield a dough and the dough is shaped into a suitable form to yield the noodle product.

Further, the invention provides a process for preparing a noodle product wherein lecithin is mixed with a texture aid and optionally with water, to produce a slurry, the slurry is blended with flour to yield a dough, and the dough is shaped into a suitable form to yield the noodle product. Preferably the noodle product is dried to a uniform stable moisture content.

A high content of lecithin can adversely affect the texture of a noodle product and cause it to be friable. This disadvantage can be prevented by further including a texture aid in the product. It is preferred to use a texture aid that includes protein, e.g. milk, milk solids or skimmed milk powder or gum gluten. Preferably the texture aid includes egg solids. Another advantage of using a texture aid is that it can facilitate the incorporation of the lecithin in the product. Lecithin commonly occurs as highly viscous matter which cannot easily be homogeneously distributed in the flour. By first preparing a slurry of lecithin, texture aid and optionally water and blending this slurry with flour, the incorporation of lecithin in the noodle product can be facilitated substantially.

The dough may be shaped into suitable form by any means, e.g. by feeding the dough through a gap between two contrary rotatable rollers and cutting the sheet obtained into pieces of suitable shape and size. Preferably the dough is shaped into a suitable form by extruding it and cutting it into pieces.

Preferably, the starting material for use in the process and for preparation of the product is purified lecithin, having a degree of purity of at least 60%. Lecithin having purity of about 80 to 90 percent is preferred.

By the purity of lecithin is meant the phosphatide content, which is expressed in percentage by weight. The phosphatide content can, for example, be provided by a mixture of phosphatides, for example a mixture which comprises similar quantities of phosphatidylcholine, phosphatidylethanolamine, phosphatidylinositol and phosphatidic acid and smaller quantities of other phosphatides e.g. phosphatidylserine. Alternatively, the phosphatide content can, for example, be provided by a phosphatide composition which is enriched in or consists mainly or entirely of one particular phosphatide e.g. phosphatidylcholine. Lecithin prepared from soybeans is preferred; however, lecithin from other sources is acceptable.

Preferably, the product is noodle containing egg solids at a level of at least 2.5%, more preferably at least 5% by weight, expressed as dry egg solids present in the finished dry weight of the product. The egg solids can be supplied for example as fresh eggs, dried egg yolk, liquid eggs or frozen eggs which have been thawed or some combination thereof. Preferably, the egg solids are provided by egg yolks, whole fresh eggs, whole frozen eggs, powdered eggs or whole egg solids or by a combination of two or more thereof, a mixture of whole egg solids and whole fresh eggs or whole frozen eggs which have been thawed, being particularly preferred.

Preferably, the process is carried out as follows:

a. The texture aid, preferably including egg solids, is blended with the lecithin which has been cut into small cubes to ease slurry preparation. If the mixture of lecithin and texture aid does not comprise a sufficient amount of moisture to allow a slurry to be formed then a small amount of water, sufficient to allow slurry formation, is added to the mixture. The mixture preferably comprises lecithin and egg solids in a weight ratio of from 2:1 to 10:1, preferably in a ratio of about 4:1. The blend is then mixed until a slurry is formed.

b. The lecithin-egg slurry is mixed with flour. Preferably, the flour is durum or other hard wheat or a blend thereof. The slurry and flour mixture is then blended until a dough of bread-like consistency is formed. The resulting mixture should be dense and cohesive and not granular.

c. The dough is then fed into an extruder to form noodles, and the extruded noodles are cut into desired lengths or shapes. Thereafter, the noodles may be dried to a constant moisture. A moisture level in the range of about 4.5 to 6.5 percent by weight is preferred. Extruding and drying of noodles are processes well known in the art. The noodles enbodying the present invention may be extruded and dried by any extruding and drying means and they may be extruded and cut into any desirable pasta shape.

After the lecithin containing noodles are produced they can be cooked as ordinary noodles. Alternatively, the noodles embodying the present invention may for example be mixed with seasoning, dried vegetable, meat and/or poultry and packaged as a soup base or as a casserole base. The consumer may then cook the noodles embodying the present invention in the same manner as regular dried soup or casserole base. THe noodles embodying the present invention can produce a soup or casserole product which is comparable to a soup or casserole product using regular noodles.

In a further embodiment the noodles can be puff-dried, e.g. in a microwave oven, to form a dry snack.

The soups, casseroles, snack foods or any other food-products prepared with the noodles embodying the present invention can have high nutritional value and they can have similar or essentially the same organoleptic properties as food products prepared with regular noodles. The noodles can also have an appearance similar to ordinary noodles.

One of the advantages of the present invention is that it can provide a palatable means of introducing high quantities of lecithin into a diet. Such a facility may be useful where a high lecithin diet has been prescribed for health reasons.

The following examples illustrate but do not limit the invention.

Example I

26.8 grams of whole frozen egg were thawed and blended with 20.3 grams of soy lecithin which was about 85 percent pure in two aliquots in a large Waring Blender. The lecithin had been cut into one inch cubes to ease slurry preparation.

52.11 grams of a mixture comprising equal parts of durum and hard wheat flours were mixed with 0.8 grams of whole egg solids in a Hobart Mixer. Both aliquots of the egg-lecithin slurry were then added to the dry ingredients in a Hobart Mixer while the mixer was stopped. The Mixer was then set to a Speed No. 2 and turned on for approximately two minutes.

Thereafter, the Mixer was stopped, set on Speed No. 3 and the dough was blended for approximately three minutes. The resulting material was a dense and cohesive dough having the consistency of bread dough.

The dough was hand fed into an Ambretti extruder so as to feed the screw properly and noodles were extruded. The resulting noodles were cut to approximately one inch (about 2.5 cm) and air conveyed onto drying trays.

The noodles were dried in Proctor and Schwartz dryers. The initial drying conditions were about 46°C—51°C for about 3.5 to 4 hours. Redrying was performed at about 76°C—83°C for about 10—20 minutes depending on moisture content. A final moisture of about 4.5 to 6.5 percent was achieved. The noodles were then packaged. Each package contained 40 grams of seasoning and meat/poultry mix and 6.5 grams of noodles. To prepare the noodles for eating, the contents of each package was brought to a boil with 9 ounces of water and allowed to simmer while covered for six minutes. The noodles had a colour and texture similar to that of non-lecithinated noodles and their taste compared favourably with that of non-lecithinated noodles.

Example II

A dry mixture of the following ingredients was prepared: 0.8 grams whole egg solids and 52.1 grams of a flour comprising about 50 percent durum patent flour and about 50 percent winter wheat flour. The dry mixture was set aside. An egg-lecithin slurry of the following ingredients was prepared: 20.3 grams of soy-lecithin haivng a lecithin content of about 85 percent and 26.8 grams of whole frozen egg which have been thawed.

The egg and lecithin were blended in a large Waring Blender. The lecithin had previously been cut into one inch cubes to ease slurry preparation.

The egg-lecithin slurry was added to the dry ingredients while the Hobart Mixer was stopped. The Mixer was then set at Speed No. 2 and turned on for approximately two minutes.

The Mixer was stopped and then set on Speed No. 3 and the dough was blended for approximately two to three minutes. The resulting dough was dense and cohesive having the consistency of bread dough.

The dough was hand fed into an Ambretti extruder. The noodles were cut into 3—4'' lengths and puff-dried in a microwave oven. The puffed noodles were packaged to be eaten as a dry snack. A single serving of 39.7 grams contained about 8 grams of lecithin.

## Claims

1. Noodle product including flour and lecithin characterised in that the lecithin content is higher then 5% by weight of the dry content of the noodle product.

2. Noodle product according to claim 1, wherein the lecithin content is at least 10%, preferably at least 20% by weight of the dry content of the noodle product.

3. Noodle product according to claim 1 or claim 2, wherein the noodle product further includes a texture aid.

4. Noodle product according to claim 3, wherein the texture aid includes protein.

5. Noodle product according to claim 3 or claim 4, wherein the texture aid includes egg solids.

6. Noodle product according to claim 5, wherein the egg solids content is at least 2.5%, preferably at least 5% by weight of the dry content of the noodle product.

7. Noodle product according to claim 5 or claim 6, wherein the egg solids are provided by whole fresh eggs, whole frozen eggs, powdered eggs or whole egg solids or by a combination of two or more thereof.

8. Noodle product according to any one of claims 1—7, wherein the flour is durum, hard wheat or a blend thereof.

9. Food product which includes a noodle product according to any one of claims 1—8, together with at least one other ingredient.

10. Process for preparing a noodle product wherein a slurry which includes lecithin is blended with flour to yield a dough and the dough is shaped into a suitable form to yield the noodle product, wherein the amount of lecithin included is higher than 5% by weight of the dry content of the noodle product.

11. Process for preparing a noodle product characterised in that lecithin is mixed with a texture aid and optionally with water, to produce a slurry, the slurry is blended with flour to yield a dough and the dough is shaped into a suitable form to yield the noodle product, wherein the amount of lecithin included is higher than 5% by weight of the dry content of the noodle product.

12. Process according to claim 11 wherein the texture aid includes protein.

13. Process according to claim 11 or claim 12 wherein the texture aid includes egg solids.

14. Process according to claim 13 wherein texture aid is used in an amount sufficient to yield a noodle product havin an egg solids content of at least 2.5%, preferably at least 5% by weight calculated on dry matter.

15. Process according to claim 13 or claim 14 wherein the texture aid includes egg yolks, whole fresh eggs, whole frozen eggs, powdered eggs, whole egg solids or a combination of two or more thereof.

16. Process according to any one of claims 13—15 wherein lecithin and egg solids are used in a weight ratio of from 2:1 to 10:1.

17. Process according to claim 16 wherein lecithin and egg solids are used in a weight ratio of about 4:1.

18. Process according to any one of claims 10—17 wherein the noodle product is dried to a uniform stable moisture content.

19. Process according to any one of claims 10—18 wherein the lecithin has a purity of at least 60% by weight.

20. Process according to claim 19 wherein the lecithin has a purity of from 80 to 90% by weight.

21. Process according to any one of claims 10—20 wherein lecithin is used in an amount sufficient to yield a noodle product having a lecithin content of at least 10% preferably at least 20% by weight calculated on dry matter.

22. Process according to any one of claims 10—21 wherein the dough is shaped into a suitable form by extruding and cutting the extruded dough into pieces.

23. Process according to any one of claims 10—22 wherein the noodle product is dried to a moisture content of from 4.5 to 6.5% by weight.

24. Process according to claim 23 wherein the extruded and cut noodle product is puff-dried to yield a dry snack food.

25. Food product which includes a noodle product prepared according to the process of any one of claims 10—24, together with at least one other ingredient.

## Patentansprüche

1. Nudelprodukt, das Mehl und Lecithin enthält, dadurch gekennzeichet, daß der Lecithingehalt höher als 5 Gew.%, bezogen auf den Trockengehalt des Nudelproduktes, ist.

2. Nudelprokukt nach Anspruch 1, worin der Lecithingehalt mindestens 10%, vorzugsweise mindestens 20 Gew.% des Trockengehaltes des Nudelproduktes beträgt.

3. Nudelprodukt nach Anspruch 1 oder 2, worin das Nudelprodukt weiters eine Texturhilfe enthält.

4. Nudelprodukt nach Anspruch 3, worin die Texturhilfe Protein enthält.

5. Nudelprodukt nach Anspruch 3 oder 4, worin die Texturhilfe Eifeststoffe enthält.

6. Nudelprodukt nach Anspruch 5, worin der Eifeststoffgehalt mindestens 2,5%, vorzugsweise mindestens 5%.% des Trockengehaltes des Nudelproduktes ist.

7. Nudelprodukt nach Anspruch 5 oder 6, worin die Eifeststoffe durch ganze frische Eier, ganze gefrorene Eier, pulverförmige Eier oder Ganzeifestoffe oder durch eine Kombination von zwei oder mehreren hievon vorgesehen sind.

8. Nudelprodukt nach einem der Ansprüche 1 bis 7, worin das Mehl Durum, Hartweizen oder eine Mischung hievon ist.

9. Nahrungsmittelprodukt, das ein Nudelprodukt nach einem der Ansprüche 1 bis 8 zusammen mit mindestens einem anderen Bestandteil enthält.

10. Verfahren zum Herstellen eines Nudelproduktes, worin ein Brei, der Lecithin enthält, mit Mehl gemischt wird, um einen Teig zu ergeben, und der Teig in eine geeignete Form gebracht wird, um das Nudelprodukt zu ergeben, worin der Anteil an enthaltenem Lecithin höher als 5 Gew.% des Trockengehaltes des Nudelproduktes, ist.

11. Verfahren zum Herstellen eines Nudelproduktes, dadurch gekennzeichnet, daß Lecithin mit einer Texturhilfe und gegebenenfalls mit Wasser gemischt wird, um einen Brei zu bilden, der Brei mit Mehl gemischt wird, um einen Teig zu ergeben, und der Teil in eine geeignete Form gebracht wird, um das Nudelprodukt zu ergeben, worin der Anteil an enthaltenem Lecithin höher als 5 Gew.% des Trockengehaltes des Nudelproduktes ist.

12. Verfahren nach Anspruch 11, worin die Texturhilfe Protein enthält.

13. Verfahren nach Anspruch 11 oder 12, worin die Texturhilfe Eifeststoffe enthält.

14. Verfahren nach Anspruch 13, worin die Texturhilfe in einem Anteil verwendet wird, der ausreicht, ein Nudelprodukt mit einem Eifeststoffgehalt von mindestens 2,5%, vorzugsweise mindestens 5 Gew.%, bezogen auf Trockenmaterial, zu ergeben.

15. Verfahren nach Anspruch 13 oder 14, worin die Texturhilfe Eidotter, ganze frische Eier, gaze gefrorene Eier, pulverförmige Eier, Ganzeifeststoffe oder eine Kombination von zwei oder mehreren hievon enthält.

16. Verfahren nach einem der Ansprüche 13 bis 15, worin Lecithin und Eifeststoffe in einem Gewichtsverhältnis von 2:1 bis 10:1 verwendet werden.

17. Verfahren nach Anspruch 16, worin Lecithin und Eifeststoffe in einem Gewichtsverhältnis von etwa 4:1 verwendet werden.

18. Verfahren nach einem der Ansprüche 10 bis 17, worin das Nudelprodukt auf einen geleichmäßigen stabilen Feuchtigkeitsgehalt getrocknet wird.

19. Verfahren nach einem der Ansprüche 10 bis 18, worin das Lecithin eine Reinheit von mindestens 60 Gew.% aufweist.

20. Verfahren nach Anspruch 19, worin das Lecithin eine Reinheit von 80 bis 90 Gew.% aufweist.

21. Verfahren nach einem der Ansprüche 10 bis 20, worin Lecithin in einem Anteil verwendet wird, der ausreicht, ein Nudelprodukt mit einem Lecithingehalt von mindestens 10%, vorzugsweise mindestens 20 Gew.%, bezogen auf Trockenmaterial, zu ergeben.

22. Verfahren nach einem der Ansprüche 10 bis 21, worin der Teig durch Extrudieren und Schneiden des extrudierten Teiges in Stücke in eine geeignete Form gebracht wird.

23. Verfahren nach einem der Ansprüche 10 bis 22, worin das Nudelprodukt auf einen Feuchtigkeitsgehalt von 4,5 bis 6,5 Gew.% getrocknet wird.

24. Verfahren nach Anspruch 23, worin das extrudierte und geschnittene Nudelprodukt puffgetrocknet wird, um ein trockenes Imbißnahrungsmittel zu ergeben.

25. Nahrungsmittelprodukt, das ein Nudelprodukt, hergestellt gemäß dem Verfahren nach einem der Ansprüche 10 bis 24, zusammen mit mindestens einem anderen Bestandteil enthält.

**Revendications**

1. Produit du type nouilles comprenant de la farine et de la lécithine, caractérisé en ce que la teneur en lécithine est supérieure à 5% en poids de la teneur sèche du produit du type nouilles.

2. Produit du type nouilles selon la revendication 1, dans lequel la teneur en lécithine est d'au moins 10%, de préférence d'au moins 20%, par rapport au poids de la teneur séche du produit du type nouilles.

3. Produit du type nouilles selon la revendication 1 ou 2, dans lequel le produit contient également un adjuvant de texturisation.

4. Produit du type nouilles selon la revendication 3, dans lequel l'adjuvant de texturisation contient des protéines.

5. Produit du type nouilles selon la revendication 3 ou 4, dans lequel l'adjuvant de texturisation contient des solides d'oeufs.

6. Produit du type nouilles selon la revendication 5, dans lequel la teneur en solides d'oeufs est d'au moins 2,5%, de préférence d'au moins 5% par rapport au poids de la teneur sèche du produit du type nouilles.

7. Produit du type nouilles selon la revendication 5 ou 6, dans lequel les solides d'oeufs sont fournis par des oeufs frais entiers, des oeufs entiers congelés, des oeufs en poudre ou des solides d'oeufs entiers ou par une combinaison de deux ou plusieurs de ceux-ci.

8. Produit du type nouilles, selon l'une quelconque des revendications 1 à 7 dans lequel la farine est la farine de durum, de blé dur ou d'un mélange de ceux-ci.

9. Produit alimentaire qui comprend un produit du type nouilles selon l'une quelconque des revendication 1 à 8, avec au moins un autre ingrédient.

10. Procédé de préparation d'un produit du type nouilles selon lequel on mélange une bouillie contenant de la lécithine avec de la farine pour obtenir une pâte et on façonne la pâte à une forme convenable pour obtenir un produit du type nouilles, la quantité de lécithine incorporée étant de plus de 5% du poids des ingrédients secs dans le produit du type nouilles.

11. Procédé de préparation d'un produit du type nouilles, caractérisé en ce qu'on mélange la lécithine avec un adjuvant de texturisation et facultativement avec de l'eau pour former une bouillie, on mélange la bouillie avec de la farine pour obtenir une pâte et on façonne la pâte à une forme appropriée pour obtenir un produit du type nouilles, dans lequel la quantité de lécithine incorporée est supérieure à 5% du poids des ingrédients secs dans le produit du type nouilles.

12. Procédé selon la revendication 11, dans lequel l'adjuvant de texturisation comprend des protéines.

13. Procédé selon la revendication 11 ou 12, dans lequel l'adjuvant de texturisation contient des solides d'oeufs.

14. Procédé selon la revendication 13, selon lequel on utilise l'adjuvant de texturisation en une quantité suffisante pour obtenir un produit du type nouille contenant au moins 2,5%, de préférence au moins 5% de solides d'oeufs par rapport au poids de la matière sèche.

15. Procédé selon la revendication 13 ou 14, dans lequel l'adjuvant de texturisation comprend des jaunes d'oeufs, des oeufs frais entiers, des oeufs frais congelés, des oeufs en poudre, des solides d'oeufs entiers ou une combinaison de deux ou plusieurs de ceux-ci.

16. Procédé selon l'une quelconque des revendications 13 à 15, dans lequel on utilise la lécithine et les solides d'oeufs en un rapport pondéral de 2:1 à 10:1.

17. Procédé selon la revendication 16, dans lequel on utilise la lécithine et les solides d'oeufs en un rapport pondéral d'environ 4:1.

18. Procédé selon l'une quelconque des revendications 10 à 17, dans lequel on sèche le produit du type nouilles à une teneur uniforme et stable en humidité.

19. Procédé selon l'une quelconque des revendications 10 à 18, dans lequel la pureté de la lécithine est d'au moins 60% en poids.

20. Procédé selon la revendication 19, dans lequel la pureté de la lécithine est de 80 à 90% en poids.

21. Procédé selon l'une quelconque des revendications 10 à 20, dans lequel on utilise la lécithine en une quantité suffisante pour obtenir un produit du type nouilles ayant une teneur en lécithine d'au moins 10%, de préférence d'au moins 20%, par rapport au poids calculé en matières sèches.

22. Procédé selon l'une quelconque des revendications 10 à 21, dans lequel on façonne la pâte à une forme appropriée en l'extrudant et en coupant en morceaux la pâte extrudée.

23. Procédé selon l'une quelconque des revendications 10 à 22, dans lequel on sèche le produit du type nouilles à une teneur en humidité de 4,5 à 6,5% en poids.

24. Procédé selon la revendication 23, dans lequel on séche par gonflement le produit en forme de nouilles extrudé et coupé pour obtenir un aliment pour encas sec.

25. Produit alimentaire qui comprend un produit du type nouilles préparé selon le procédé de l'une quelconque des revendications 10 à 24 ensemble avec au moins un autre ingrédient.